# EUROPEAN PATENT SPECIFICATION

(11) **EP 1 890 858 B1**
(45) Date of publication and mention of the grant of the patent: **30.09.2009**
(21) Application number: 05751931.6
(22) Date of filing: 07.06.2005
(51) Int. Cl.: B29C 47/10, A47G 21/18, C08J 3/22

(54) **PROCESS OF PRODUCING SCENTED DRINKING STRAW AND THE PRODUCT PRODUCED FROM THE PROCESS**
VERFAHREN ZUR HERSTELLUNG EINES PARFÜMIERTEN TRINKHALMS UND AUS DEM VERFAHREN HERGESTELLTES PRODUKT
PROCEDE DE PRODUCTION DE PAILLE POUR BOIRE PARFUMEE ET PRODUIT AINSI FABRIQUE

(43) Date of publication of application: 27.02.2008
(73) Proprietor: Tetra Laval Holdings & Finance SA, 1009 Pully (CH)
(72) Inventor: KESTLE, Chris, Glen Allen, VA 23059 (US); SCOTT, Dan,215/34 Siam Place, Nongpruee, Chonburee, 20105 (TH); OLSSON, Niclas, Richmond, VA 23233 (US)
(74) Representative: Forsberg, Lars-Ake
(86) International application number: PCT/SE2005/000853
(87) International publication number: WO 2006/123978

(56) References cited:
- US-A- 3 346 187
- US-A- 3 505 432
- US-A- 3 615 595
- US-A1- 2001 010 849
- US-A1- 2003 168 772

## Description

### Technical Field

The present invention relates to a process of producing drinking straw in the field of industrial engineering.

### Background Arts

The productions of drinking straw and flavoured drinking straw are known in the prior art. While these inventions fulfil their respective objectives and requirements, they do not deliver drinking straws containing scent or scent that does not associate with a certain flavour. In this respect, the process according to the present invention has been invented to deliver scented drinking straws.

Initially, the process of producing scented drinking straw has started by introducing a FDA approved scented oil into the drinking straw extrusion process.

However, this method was proved unsuccessful since the introducing the scented oil directly into the drinking straw extruder gave the three following problems.

The first problem was that the scented oil boiled and gave a burned smell at the temperature of between 150-250 degrees Celsius during normal operation of the extruder.

The second problem was that the extruder lost its pressure since the properties of the scented oil reduced the friction inside the extruder. The result was that none of or very few polypropylene plastic came out from the extruder even though the production was operated at normal production speed of 20-50 Kg per hour.

The last problem was that the introducing the liquid scented oil via a dosing system proved difficult and feeding scented oil at a stable rate was also extremely difficult. During trials a pump was used in the process but it gave an unstable pumping motion and scented oil was pulsating into the extruder and this caused an unstable process with varied amount of scented oil in different batches of the drinking straws production.

With respect to the above-mentioned problems, the scented oil has been developed into scented compound.

The scented compound is produced from the mixture of polypropylene plastic and the FDA approved scented oil. Theoretically, introducing scented compound into the extruder would allow the building up of pressure whilst melting polypropylene plastic and scented oil. However, this method was proved unsuccessful due to the same three problems as mentioned above were encountered.

A method of scenting a polyolefin with a scent-imparting material to form master pellets that can be used to scent larger quantities of polyolefins is known from document US-A-3 505 432.

Thereby, the final solution to these problems has been to create a scented polypropylene compound by mixing the polypropylene plastic and scented oils plus additives in a blender to create a polymer-chain. This mixture is done so that all the ingredients are blended and bonded properly. This process will enable the control of the amount of scented oil introduced into the compound.

### Characteristics and Objectives of Invention

The general purpose of the present invention, which will be described subsequently in greater detail, is to provide a process of producing scented drinking straw by introducing scented polypropylene compound into the polypropylene mixture at the beginning of the drinking straw extrusion process through a color-feed typed dosing system. It ensures that the scented drinking straw produced from the process will deliver an independent and long-lasting scent which will not evaporate or rub off easily since the scented oil has incorporated into the polypropylene plastic used for producing scented drinking straw.

### Disclosure of Invention

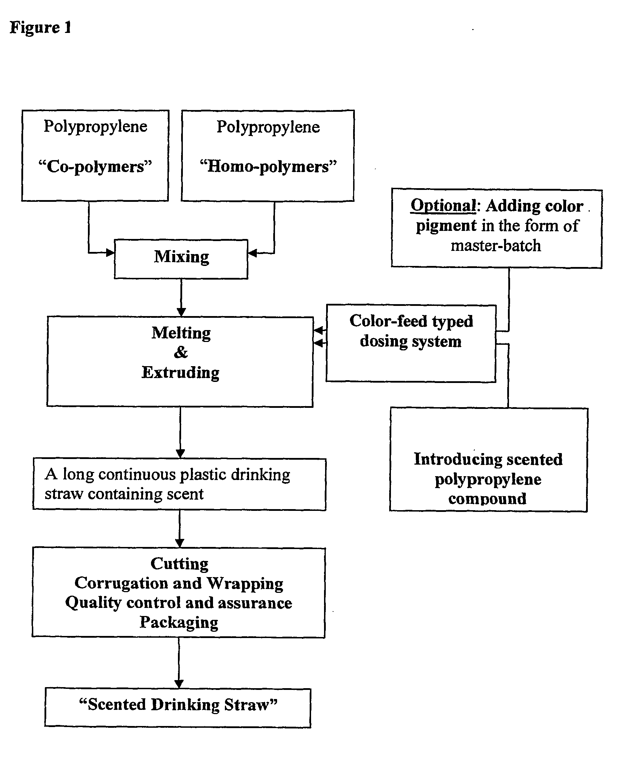

The process of producing scented drinking straw (Figure 1) starts when two grades of polypropylene plastic are mixed together at a ration of 5-25% Copolymers and 75-95% of Homo-polymers. This polypropylene mixture, which will be referred to as base mixture, is then pushed through a metal barrel by a metal screw pushing the mixture through between 2-8 heating zones melting the mixture in stages before entering the extrusion process at a rate of 40 kilograms per hour. The optional color pigment in the form of master-batch can be introduced into the base mixture if a certain color drinking straw is required. This master-batch can be introduced at the beginning of the extrusion process through a color-feed typed dosing system. This dosing system can be adjusted from 0-999 rpm.

Also, scented polypropylene compound is introduced into the base mixture at the beginning of the extrusion process through said dosing system. The compound of which containing 5-10% scented oil is made of a mixture of polypropylene plastic and FDA approved scented oil plus additives. In addition, the amount of the compound introduced through the dosing system can be adjusted at a rate of 1.4-3.5 kilograms per hour depending on the strength of scent desired. The amount of the compound incorporated in the finished drinking straw is between 1-20%.

The scented polypropylene compound introduced into the extrusion process will not give a burned smell of boiled scented oil, which will happen when introducing scented oil into the process. This is because the boiling point of the compound is higher than the temperature of a normal operation of the extruder used in the extrusion process, and that of the scented oil. Also, introducing the compound into the base mixture at the beginning of the extrusion process will bring the subsequent mixture to a suitable stage that will sustain optimal pressure and friction for the function of the extruder. In addition, introducing the compound, which is in a form of solid, will enhance the control of the amount of scented oil introduced into the extrusion process since the amount of scented oil in the compound is stable.

The subsequent mixture of the scented polypropylene compound and base mixture is extruded out as a long continuous plastic drinking straw containing scent. The extruded drinking straw is then proceeding to the cutting process for a desired length depending on the length required for finished product. The length, weight and diameter are compared to standard specification. Then, the drinking straws are transported and fed through corrugation and wrapping process, quality control and assurance process, and finally, packaging process before they are transported to the warehouse.

An example of the actual process of producing scented drinking straw is a batch production for producing 1000 pieces of scented drinking straws with 4 mm. in diameter, 165 mm, in length and a wall thickness of 0.2 mm. This batch production will use 475 grams of base mixture and 37.66 grams of scented polypropylene compound in the process.

### Brief Description of the Drawings

Figure 1: Flowchart of the process of introducing scented polypropylene compound into the drinking straw

### The Best Mode to Carry Out the Invention

The best mode to carry out the invention is the same as stated in the Disclosure of Invention Part

## Claims

1. A process of producing scented drinking straw comprising:
- melting a polypropylene mixture comprising at least one grade by pushing said mixture through between 2-8 heating zones before entering the extrusion process;
- introducing scented polypropylene compound, which is a mixture of polypropylene plastic and FDA approved scented oil, into the polypropylene mixture through a color-feed typed dosing system at the beginning of the extrusion process; and
- extruding out the mixture of scented polypropylene compound and the polypropylene mixture as a long continuous drinking straw containing scent.

2. A process according to claim 1 comprising:
mixing of two grades of polypropylene at a ration of 5-25% Co-polymer and 75-95% Homo-polymers to form a polypropylene mixture.

3. A scented drinking straw produced by the process of Claim 1.

## Patentansprüche

1. Verfahren zur Herstellung eines duftenden Trinkhalms, bei dem man:
- eine Polypropylenmischung, die mindestens eine Qualität umfaßt, aufschmilzt, indem man die Mischung vor dem Eintritt in den Extrusionsprozeß durch 2-8 Heizzonen drückt;
- über ein Dosiersystem vom Farbzufuhr-Typ zu Beginn des Extrusionsprozesses duftendes Polypropylencompound, bei dem es sich um eine Mischung aus Polypropylen-Kunststoff und von der FDA zugelassenem Duftöl handelt, in die Polypropylenmischung einträgt und
- die Mischung aus dem duftenden Polypropylencompound und der Polypropylenmischung als dufthaltigen langen kontinuierlichen Trinkhalm ausextrudiert.

2. Verfahren nach Anspruch 1, bei dem man:
zwei Qualitäten von Polypropylen in einem Verhältnis von 5-25% Copolymer und 75-95% Homopolymeren zu einer Polypropylenmischung vermischt.

3. Duftender Trinkhalm, hergestellt nach dem Verfahren gemäß Anspruch 1.

## Revendications

1. Procédé de production d'un chalumeau à boire aromatisé, comprenant les étapes qui consistent à :
- faire fondre un mélange de polypropylène qui comprend au moins une qualité de polypropylène en refoulant ledit mélange à travers 2 à 8 zones de chauffage avant qu'il entre dans l'opération d'extrusion,
- par l'intermédiaire d'un système de dosage de type pour injection de colorant, introduire au début de l'opération d'extrusion un composé aromatisé de polypropylène constitué d'un mélange de matière plastique de polypropylène et d'une huile aromatisée agréée par les autorités de l'alimentation dans le mélange de polypropylène et
- extruder le mélange du composé aromatisé de polypropylène et du mélange de polypropylène sous la forme d'un long chalumeau à boire contenant un arôme.

2. Procédé selon la revendication 1, comprenant les étapes qui consistent à mélanger deux qualités de polypropylène à un rapport de 5 à 25 % de copolymère et de 75 à 95 % d'homopolymère pour former un mélange de polypropylène.

3. Chalumeau à boire aromatisé produit à l'aide du procédé selon la revendication 1.
